# EUROPÄISCHE PATENTSCHRIFT

(11) **EP 3 551 910 B1**
(45) Veröffentlichungstag und Bekanntmachung des Hinweises auf die Patenterteilung: **03.06.2020**
(21) Anmeldenummer: 17771335.1
(22) Anmeldetag: 18.09.2017
(51) Int. Cl.: F16H 41/28, F16H 45/02, F16H 41/24, B60K 6/405, B60K 6/48, F16D 13/68

(54) **DREHMOMENTWANDLERVORRICHTUNG, INSBESONDERE FÜR EINEN ANTRIEBSSTRANG EINES KRAFTFAHRZEUGS**
TORQUE CONVERTER DEVICE, IN PARTICULAR FOR A DRIVE TRAIN OF A MOTOR VEHICLE
DISPOSITIF CONVERTISSEUR DE COUPLE DESTINÉ EN PARTICULIER À UN GROUPE MOTOPROPULSEUR D'UN VÉHICULE À MOTEUR

(30) Priorität: 09.12.2016 DE 102016014725
(43) Veröffentlichungstag der Anmeldung: 16.10.2019
(73) Patentinhaber: Daimler AG, 70372 Stuttgart (DE)
(72) Erfinder: VELTHAUS, Jan, 70327 Stuttgart (DE); ZIEGLER, Bernhard, 73098 Rechberghausen (DE); SCHUSTER, Tobias, 73733 Esslingen (DE); RUBE, Lukas, 70372 Stuttgart (DE); HEUKELBACH, Kai, 73257 Köngen (DE); KOPPITZ, Bernd, 73650 Winterbach (DE); ZEHREN, Felix, 70327 Stuttgart-Wangen (DE)
(74) Vertreter: JENSEN & SON
(86) Internationale Anmeldenummer: PCT/EP2017/001099
(87) Internationale Veröffentlichungsnummer: WO 2018/103869

(56) Entgegenhaltungen:
- US-A1- 2012 242 199
- US-A1- 2013 256 075

## Beschreibung

Die Erfindung betrifft eine Drehmomentwandlervorrichtung und ein Kraftfahrzeuggetriebe mit einer Drehmomentwandlervorrichtung.

Aus der DE 103 10 423 A1 ist bereits eine Drehmomentwandlervorrichtung, mit einem Wandlerdeckel, der eine Deckelschale und eine mit der Deckelschale fest verbundene Nabe aufweist, und mit zumindest einer Lamellenkupplung, welche zumindest einen Innenlamellenträger umfasst, bekannt. Die US 2012/ 0242199 A1 beschreibt eine Drehmomentwandlervorrichtung für einen Antriebsstrang eines Kraftfahrzeugs, mit einem Wandlerdeckel der eine Deckelschale und eine mit der Deckelschale fest verbundene Nabe aufweist, und mit zumindest einer Lamellenkupplung und einen Innenlamellenträger.

Der Erfindung liegt insbesondere die Aufgabe zugrunde, eine vorteilhaft kompakte und montagefreundliche Drehmomentwandlervorrichtung bereitzustellen. Sie wird durch eine erfindungsgemäße Ausgestaltung entsprechend dem Anspruch 1 gelöst. Weiterbildungen der Erfindung ergeben sich aus den abhängigen Ansprüchen.

Die Erfindung geht aus von einer Drehmomentwandlervorrichtung, insbesondere für einen Antriebsstrang eines Kraftfahrzeugs, mit einem Wandlerdeckel, der eine Deckelschale und eine mit der Deckelschale fest verbundene Nabe aufweist, und mit zumindest einer Lamellenkupplung, welche zumindest einen Innenlamellenträger umfasst.

Es wird vorgeschlagen, dass die Nabe den zumindest einen inneren Lamellenzentrierkörper der Lamellenkupplung ausbildet. Der innere Lamellenzentrierkörper ist dabei ein Teil des Innenlamellenträgers. Die Nabe ist einstückig mit dem inneren Lamellenzentrierkörper der Lamellenkupplung ausgebildet. Durch die Nutzung der Nabe als innerer Lamellenzentrierkörper können die Einzelteile auf Nabe und Deckelschale gering gehalten werden. Es kann ein Bearbeitungsaufwand beim Zusammenbau des Wandlerdeckels gering gehalten werden. Hierdurch kann eine vorteilhaft montagefreundliche Drehmomentwandlervorrichtung bereitgestellt werden. Ferner kann eine Integration zusätzlicher Funktionen in dem Wandlerdeckel erreicht werden. Es kann insbesondere eine kompakte Drehmomentwandlervorrichtung bereitgestellt werden. Unter einer "Drehmomentwandlervorrichtung" soll in diesem Zusammenhang insbesondere zumindest ein Teil eines Drehmomentwandlers verstanden werden, der dazu vorgesehen ist, insbesondere bei einem Anfahrvorgang ein Drehmoment einer Antriebseinheit in ein Drehmoment zu wandeln, das auf eine mit den Rädern des Kraftfahrzeugs verbundene Abtriebseinheit wirkt. Vorzugsweise ist die Drehmomentwandlervorrichtung von einem Drehmomentwandler gebildet. Bevorzugt ist die Drehmomentwandlervorrichtung für einen Antriebsstrang eines Hybridkraftfahrzeugs vorgesehen. Ferner soll in diesem Zusammenhang unter einem "Wandlerdeckel" insbesondere eine Abdeckung der Drehmomentwandlervorrichtung verstanden werden, welche zumindest ein Teil der Drehmomentwandlervorrichtung antriebsseitig überdeckt. Vorzugsweise soll darunter insbesondere eine Abdeckung verstanden werden, welche dazu vorgesehen ist, zu einem Antrieb eines Pumpenrads eine Lamellenkupplung und/oder ein Turbinenrad der Drehmomentwandlervorrichtung zu übergreifen. Bevorzugt ist der Wandlerdeckel in zumindest einem Betriebszustand angetrieben. Vorzugsweise ist der Wandlerdeckel in zumindest einem Betriebszustand zu einer Übertragung einer Antriebsbewegung auf das Pumpenrad vorgesehen. Des Weiteren soll unter einer "Deckelschale" in diesem Zusammenhang insbesondere ein schalen- und/oder topfförmiger Teil des Wandlerdeckels verstanden werden. Vorzugsweise soll darunter insbesondere ein Teil des Wandlerdeckels verstanden werden, welcher in einem montierten Zustand die Lamellenkupplung und/oder das Turbinenrad der Drehmomentwandlervorrichtung übergreift. Bevorzugt soll darunter insbesondere ein kreisringförmiger Teil des Wandlerdeckels verstanden werden, welcher sich um eine Nabe des Wandlerdeckels herum erstreckt. Vorzugsweise ist die Deckelschale von einem insbesondere schalen- und/oder topfförmigen Blechteller gebildet. Die Nabe des Wandlerdeckels ist insbesondere zu einer Aufnahme einer Welle des Turbinenrads und/oder einer Eingangswelle eines mit der Drehmomentwandlervorrichtung gekoppelten Kraftfahrzeuggetriebes vorgesehen. Bevorzugt ist die Nabe insbesondere direkt oder indirekt mit einer Kurbelwelle einer Antriebseinheit, insbesondere eines Motors, des Kraftfahrzeugs gekoppelt. Unter einem "Innenlamellenträger" soll insbesondere ein Bauteil der Lamellenkupplung verstanden werden, das dazu vorgesehen ist, zumindest eine Lamelle, insbesondere zumindest eine Innenlamelle, der Lamellenkupplung drehfest zu lagern. Vorzugsweise soll darunter insbesondere ein Bauteil verstanden werden, das dazu vorgesehen ist, radial innenliegende Lamellen der Lamellenkupplung drehfest zu lagern und/oder aufzunehmen. Mit "einstückig" ist eine Ausgestaltung in einem einzigen nicht gefügten Materialblock gemeint, wie z. B. durch die Herstellung durch Fräsen, Drehen und/oder Bohren aus einem Materialblock oder durch die Herstellung aus einem Guss und/oder durch die Herstellung in einem Ein- oder Mehrkomponentenspritzverfahren. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Ferner wird vorgeschlagen, dass die Nabe über eine Schweißnaht mit der Deckelschale verbunden ist. Vorzugsweise ist die Nabe über eine umlaufende Schweißnaht mit der Deckelschale verbunden. Die Deckelschale ist insbesondere über eine radial innenliegende Kante mit der Nabe verbunden. Besonders bevorzugt weist die Nabe einen kreisringförmigen Fortsatz auf, an welchen die Deckelschale angeschweißt ist. Dadurch kann insbesondere eine besonders zuverlässige Verbindung zwischen der Deckelschale und der Nabe bereitgestellt werden. Insbesondere kann dadurch eine besonders kompakte Verbindung bereitgestellt werden. Es kann insbesondere eine Anzahl von Bauteilen gering gehalten werden.

Des Weiteren wird vorgeschlagen, dass die Schweißnaht in einem radialen Bereich von Lamellen der Lamellenkupplung angeordnet ist. Vorzugsweise soll darunter insbesondere verstanden werden, dass die Schweißnaht aus einer axialen Richtung, insbesondere entlang einer Rotationsachse der Lamellen, betrachtet vollständig von den Lamellen überdeckt ist. Dadurch kann insbesondere eine vorteilhafte Anordnung der Schweißnaht erreicht werden. Unter einem "radialen Bereich von Lamellen" soll in diesem Zusammenhang insbesondere ein zylindrischer Bereich verstanden werden, welcher sich parallel zu einer Rotationsachse der Lamellen der Lamellenkupplung erstreckt und dessen Grundseite von den Lamellen der Lamellenkupplung gebildet ist. Vorzugsweise weist der radiale Bereich entlang der Rotationsachse der Lamellen einen konstanten Querschnitt auf, welcher der Form der Lamellen, in einer Ebene senkrecht zu der Rotationsachse betrachtet, entspricht.

Es wird ferner vorgeschlagen, dass die zumindest eine Nabe zumindest einen Kühlölkanal aufweist, welcher dazu vorgesehen ist, Kühlöl für eine Kühlung der zumindest einen Lamellenkupplung an der Lamellenkupplung bereitzustellen. Dadurch kann insbesondere eine zuverlässige Bereitstellung von Kühlöl an der Lamellenkupplung erreicht werden. Es kann insbesondere erreicht werden, dass die Lamellenkupplung von innen heraus mit Kühlöl versorgt wird. Durch die teilweise Ausbildung der Nabe als innerer Lamellenzentrierkörper, kann Kühlöl über den Kühlölkanal direkt zu den Lamellen der Lamellenkupplung geführt werden. Unter einem "Kühlölkanal" soll in diesem Zusammenhang insbesondere ein Kanal verstanden werden, welcher zu einer Führung von Kühlöl vorgesehen. Vorzugsweise soll darunter insbesondere ein Kanal verstanden werden, durch welchen passiv oder aktiv Kühlöl geführt werden kann. Der Kühlölkanal ist vorzugsweise einstückig mit der Nabe ausgebildet. Der Kühlölkanal ist besonders bevorzugt als Kühlölkanalbohrung in der einstückigen Nabe ausgebildet.

Es wird weiter vorgeschlagen, dass die Nabe gestufte Kontur aufweist, wobei der innere Lamellenzentrierkörper an einer radial inneren Stufe ausgebildet ist. Die Nabe weist dabei die gestufte Kontur und dabei die innere Stufe einstückig auf, was bedeutet, dass die gestufte Kontur nicht durch ein Anfügen von Teilen zustande kommt, sondern durch eine Ausbildung der gestuften Kontur in der einstückigen Nabe. Vorzugsweise weist die Nabe in axialer Richtung unterschiedliche Radien auf, welche eine gestufte Kontur ergeben. Dadurch können insbesondere verschiedene Funktionen an der Nabe realisiert werden. Es kann insbesondere vorteilhaft der innere Lamellenzentrierkörper ausgebildet werden. Unter einer "gestuften Kontur" soll in diesem Zusammenhang insbesondere verstanden werden, dass eine Außenkontur der Nabe Stufen ausbildet. Vorzugsweise soll darunter insbesondere verstanden werden, dass die Nabe entlang einer Rotationsachse der Nabe unterschiedliche Radien aufweist, welche sich insbesondere sprunghaft ändern. Vorzugsweise bildet die Nabe zumindest zwei Stufen aus, welche jeweils einen im Wesentlichen konstanten Radius aufweisen. Bevorzugt weisen die zumindest zwei Stufen einen wesentlichen differierenden Radius auf. Dabei soll unter einem "wesentlichen differierenden Radius" insbesondere verstanden werden, dass ein kleinster Radius maximal 95%, vorzugsweise maximal 85% und besonders bevorzugt maximal 75% eines größten Radius beträgt.

Weiterhin wird vorgeschlagen, dass die Nabe eine einstückig durch die Nabe ausgebildete radiale zur Lagerung einer Getriebeeingangswelle aufweist. Mit der radialen Lagerstelle ist eine Lagerstelle gemeint, welche die Getriebeeingangswelle zumindest in radialer Richtung abstützt. Besonders bevorzugt weist die Nabe eine Lagerstellenbohrung zur Ausbildung der radialen Lagerstelle auf.

Ferner wird vorgeschlagen, dass der Kühlölkanal an die radial innere Stufe der Nabe führt. Vorzugsweise endet der Kühlölkanal an einer Mantelfläche der radial inneren Stufe der Nabe. Besonders bevorzugt beginnt der Kühlölkanal in einem Bereich der radialen Lagerstelle. Dadurch kann zuverlässig Kühlöl von einer Innenseite der Nabe auf eine Außenseite der Nabe geleitet werden. Unter einer "radial inneren Stufe" soll in diesem Zusammenhang insbesondere eine von einer Stufe mit einem größten Radius gegenüber der Rotationsachse verschiedene Stufe verstanden werden. Vorzugsweise soll darunter insbesondere eine Stufe mit einem kleinsten Radius gegenüber der Rotationsachse der Nabe verstanden werden.

Des Weiteren wird vorgeschlagen, dass die Lamellenkupplung zumindest einen Betätigungskolben zu einer Betätigung der Lamellenkupplung aufweist, welcher an einer radial äußeren Stufe der Nabe angeordnet ist. Dabei ist die radial äußere Stufe vorzugsweise einstückig durch die Nabe ausgebildet. Dadurch kann eine vorteilhaft kompakte Drehmomentwandlervorrichtung bereitgestellt werden. Es kann insbesondere eine vorteilhafte Integration mehrerer Funktionen an der Nabe erreicht werden. Unter einem "Betätigungskolben" soll in diesem Zusammenhang insbesondere eine Einheit verstanden werden, welche zu einer Betätigung der Lamellenkupplung vorgesehen ist. Vorzugsweise soll darunter insbesondere eine Einheit verstanden werden, die dazu vorgesehen ist, Lamellen der Lamellenkupplung, insbesondere quer zu einer Rotationsachse, mit einer Kraft zu beaufschlagen. Vorzugsweise ist der Betätigungskolben insbesondere dazu vorgesehen, gegeneinander verdrehbare Lamellen der Lamellenkupplung gegeneinander zu drücken, um eine relative Verdrehung zumindest zu hemmen. Ferner soll unter einer "radial äußeren Stufe" in diesem Zusammenhang insbesondere eine von einer Stufe, insbesondere der radial inneren Stufe, mit einem kleinsten Radius gegenüber der Rotationsachse verschiedene Stufe verstanden werden. Vorzugsweise soll darunter insbesondere eine Stufe mit einem größten Radius gegenüber der Rotationsachse der Nabe verstanden werden.

Es wird ferner vorgeschlagen, dass die zumindest eine Nabe einen einstückig durch die Nabe ausgebildeten Druckölkanal für den Betätigungskolben aufweist, welcher an die radial äußere Stufe der Nabe führt. Vorzugsweise ist der Druckölkanal dazu vorgesehen, zu einer Betätigung des Betätigungskolbens den Betätigungskolben mit Drucköl zu versorgen. Vorzugsweise ist der Druckölkanal dazu vorgesehen, zu einer Betätigung des Betätigungskolbens Drucköl hinter den Betätigungskolben zu führen und mit dem Druck des Drucköls zu beaufschlagen. Dadurch kann insbesondere eine zuverlässige Bereitstellung von Drucköl an dem Betätigungskolben erreicht werden. Es kann insbesondere erreicht werden, dass der Betätigungskolben von innen heraus mit Drucköl versorgt wird. Es kann insbesondere eine vorteilhaft hohe Integration mehrerer Funktionen an der Nabe erreicht werden. Unter einem "Druckölkanal" soll in diesem Zusammenhang insbesondere ein Kanal verstanden werden, welcher zu einer Führung von Drucköl vorgesehen ist. Vorzugsweise soll darunter insbesondere ein Kanal verstanden werden, durch welchen passiv oder aktiv Drucköl geführt werden kann. Vorzugsweise weist die Nabe zur Ausbildung des Druckölkanals eine Druckölkanalbohrung auf.

Es wird weiter vorgeschlagen, dass die zumindest eine Lamellenkupplung von einer Wandlerüberbrückungskupplung gebildet ist. Dadurch kann insbesondere eine vorteilhafte effiziente Drehmomentwandlervorrichtung bereitgestellt werden. Unter einer "Wandlerüberbrückungskupplung" soll in diesem Zusammenhang insbesondere eine Kupplung eines Drehmomentwandlers verstanden werden, welche zu einer Überbrückung von drehmomentwandelnden Teilen des Drehmomentwandlers vorgesehen ist. Vorzugsweise soll darunter insbesondere eine Kupplung verstanden, welche ein Pumpenrad und ein Turbinenrad des Drehmomentwandlers mechanisch verbindet. Hierdurch entsteht insbesondere eine direkte mechanische Verbindung zwischen Antriebs- und Abtriebsseite des Drehmomentwandlers, wobei eine Drehmomentwandlung unterbunden wird.

Ferner wird vorgeschlagen, dass die Drehmomentwandlervorrichtung zumindest eine E-Maschine aufweist, welche zumindest teilweise radial außerhalb des Wandlerdeckels angeordnet ist und zumindest einen Rotor aufweist. Vorzugsweise umgreift die E-Maschine zumindest teilweise den Wandlerdeckel der Drehmomentwandlervorrichtung. Bevorzugt ist die E-Maschine insbesondere von einem kreisringförmigen Elektromotor gebildet. Die E-Maschine dient insbesondere zu einer Bereitstellung eines Hybridantriebs. Dadurch kann insbesondere eine vorteilhaft kompakte Drehmomentwandlervorrichtung bereitgestellt werden. Durch den kompakten Aufbau des Wandlerdeckels kann insbesondere vorteilhaft eine Anordnung der E-Maschine radial außerhalb des Wandlerdeckels erreicht werden. Durch den geringen Durchmesser des Wandlerdeckels bzw. der Lamellenkupplung werden insbesondere mehr Lamellen zur Darstellung der benötigten Reibfläche benötigt. Zur Erreichung einer zuverlässigen Kupplungswirkung bei vielen Reibflächen sind insbesondere die Federbereiche an den Lamellen sowie fest angebundene Lamellen vorgesehen. Unter "radial außerhalb" soll in diesem Zusammenhang insbesondere verstanden werden, dass ein minimaler Abstand der E-Maschine zu einer Rotationsachse des Wandlerdeckels größer ist als ein minimaler Abstand des Wandlerdeckels zu der Rotationsachse des Wandlerdeckels. Vorzugsweise ist die E-Maschine in zumindest einer Ebene, welche die E-Maschine und den Wandlerdeckel schneidet und sich senkrecht zu der Rotationsachse des Wandlerdeckels erstreckt, ausgehend von der Rotationsachse des Wandlerdeckels außerhalb der Lamellenkupplung angeordnet. Besonders bevorzugt existiert zumindest eine Ebene, welche sowohl die E-Maschine als auch die einstückige Nabe als auch die Lamellenkupplung schneidet und die sich senkrecht zu der Rotationsachse des Wandlerdeckels erstreckt. Besonders bevorzugt ist die E-Maschine axial gesehen im Wesentlichen in einem axialen Anordnungsbereich der Lamellenkupplung sowie einem axialen Anordnungsbereich der einstückigen Nabe angeordnet. Vorzugsweise umgibt die E-Maschine im Wesentlichen die Lamellenkupplung und die einstückige Nabe.
Des Weiteren wird vorgeschlagen, dass die Nabe des Wandlerdeckels zu einer Anbindung des Rotors der zumindest einen E-Maschine vorgesehen ist. Vorzugsweise ist die Nabe des Wandlerdeckels zu einer Anbindung und Zentrierung des Rotors der zumindest einen E-Maschine vorgesehen. Bevorzugt ist der Rotor der E-Maschine drehfest mit der Nabe des Wandlerdeckels verbunden. Dadurch kann insbesondere eine vorteilhaft kompakt gebaute Drehmomentwandlervorrichtung mit einer E-Maschine bereitgestellt werden. Es kann insbesondere eine vorteilhafte Integration der E-Maschine in der Drehmomentwandlervorrichtung erreicht werden. Ferner kann insbesondere eine vorteilhaft hohe Integration mehrerer Funktionen an der Nabe erreicht werden. Besonders bevorzugt weist die Nabe einen einstückig durch die Nabe ausgebildeten Anbindungsbereich zu einer drehfesten Anbindung und radialen Zentrierung des Rotors der E-Maschine auf.

Es wird ferner vorgeschlagen, dass die Deckelschale zumindest eine in Umfangsrichtung verlaufende Stufe aufweist, welche einen Aufnahmebereich für die E-Maschine ausbildet. Vorzugsweise ist ein minimaler Abstand der E-Maschine zu der Rotationsachse des Wandlerdeckels geringer als ein maximaler Abstand, senkrecht zu der Rotationsachse des Wandlerdeckels, des Wandlerdeckels zu der Rotationsachse des Wandlerdeckels. Die Stufe weist insbesondere einen geringeren Radius auf als ein maximaler Radius des Wandlerdeckels. Dadurch kann insbesondere eine vorteilhaft integrierte Anordnung der E-Maschine an dem Wandlerdeckel erreicht werden. Es kann insbesondere eine vorteilhaft kompakte Drehmomentwandlervorrichtung bereitgestellt werden.

Durch den Einsatz einer hochfunktionellen Nabe im Wandlerdeckel, können die Einzelteile auf Nabe und Deckelschale gering gehalten werden. Vorzugsweise sind die Funktionen des Lamellenträgers, eines Mitnehmerrings und einer Kolbenführung zumindest teilweise in die Nabe integriert. Dadurch entfallen insbesondere diese Teile und die Bearbeitung des Zusammenbaus des Wandlerdeckels wird gering gehalten. Durch diese Funktionsverdichtung in der Nabe entsteht konstruktiver Freiraum für die Integration der E-Maschine. Die Nabe kann verschiedene, einem Fachmann als sinnvoll erscheinende Funktionen beinhalten, wie beispielsweise die Zentrierung der Lamellenkupplung, die Lagerung einer Antriebswelle die Abdichtung zumindest von Teilbereichen der Lamellenkupplung, die Integration von Kühlölkanälen für die Lamellenkupplung, die Integration von Druckölkanälen für die Lamellenkupplung, die drehfeste Aufnahme und Anbindung der Lamellenkupplung, die Zentrierung, Führung und Dichtung des Betätigungskolbens der Lamellenkupplung, die Bereitstellung von Axiallagerstellen für benachbarte Bauteile, die Zentrierung des Systems aus Wandler und E-Maschine zu der Antriebseinheit und/oder die drehfeste Anbindung und Zentrierung des Rotors der E-Maschine.

Weitere Vorteile ergeben sich aus der folgenden Figurenbeschreibung. In den Figuren ist ein Ausführungsbeispiel der Erfindung dargestellt. Die Figuren, die Figurenbeschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Dabei zeigen:
- Fig. 1: eine schematische Darstellung eines Kraftfahrzeugs mit einer Antriebseinheit und mit einem Kraftfahrzeuggetriebe, welches eine erfindungsgemäße Drehmomentwandlervorrichtung aufweist, in einer schematischen Darstellung,
- Fig. 2: das Kraftfahrzeuggetriebe mit der erfindungsgemäßen Drehmomentwandlervorrichtung in einer schematischen Schnittdarstellung,
- Fig. 3: die erfindungsgemäße Drehmomentwandlervorrichtung mit einem Wandlerdeckel und mit einer Lamellenkupplung in einer schematischen Schnittdarstellung entlang der Schnittlinie III-III und
- Fig. 4: die erfindungsgemäße Drehmomentwandlervorrichtung mit dem Wandlerdeckel in einer schematischen Darstellung.

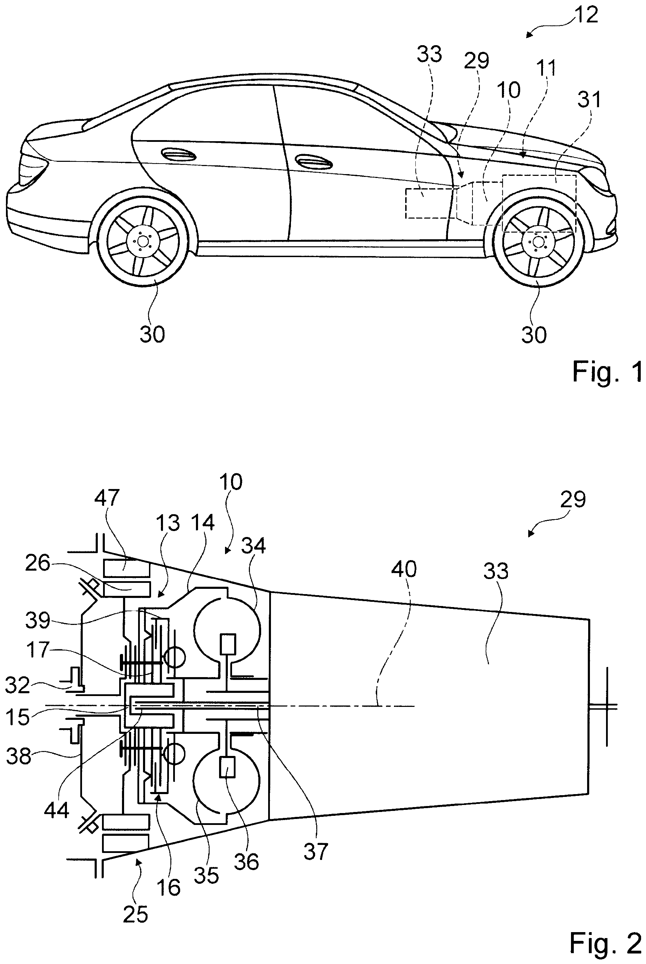

Die Figur 1 zeigt schematisch ein Kraftfahrzeug 12. Das Kraftfahrzeug 12 ist von einem Hybrid-Kraftfahrzeug gebildet. Das Kraftfahrzeug 12 umfasst einen Antriebsstrang 11, über welchen nicht weiter sichtbar Antriebsräder 30 des Kraftfahrzeugs 12 angetrieben werden. Der Antriebsstrang 11 umfasst eine Antriebseinheit 31. Die Antriebseinheit 31 ist von einem Verbrennungsmotor gebildet. Ferner umfasst das Kraftfahrzeug 12 eine weitere Antriebseinheit, welche in ein Kraftfahrzeuggetriebe 29 des Kraftfahrzeugs 12 integriert ist. Die weitere Antriebseinheit bildet ein Teil des Kraftfahrzeuggetriebes 29. Die weitere Antriebseinheit ist von einer E-Maschine 25 gebildet. Die E-Maschine 25 ist von einem Elektromotor gebildet. Die Antriebseinheit 31 weist eine angetriebene Kurbelwelle 32 auf, welche in das Kraftfahrzeuggetriebe 29 ragt. Das Kraftfahrzeug 12 weist das Kraftfahrzeuggetriebe 29 auf. Das Kraftfahrzeuggetriebe 29 bildet einen Teil des Antriebsstrangs 11 des Kraftfahrzeugs 12. Das Kraftfahrzeuggetriebe 29 ist entlang des Antriebsstrangs 11, insbesondere entlang eines Kraftflusses des Antriebsstrangs 11, hinter der Antriebseinheit 31 angeordnet. Das Kraftfahrzeuggetriebe 29 wird in zumindest einem Betriebszustand über die Antriebseinheit 31 angetrieben. Das Kraftfahrzeuggetriebe 29 weist eine Drehmomentwandlervorrichtung 10 und ein Automatikgetriebe 33 auf. Die Drehmomentwandlervorrichtung 10 ist entlang eines Kraftflusses vor dem Automatikgetriebe 33 angeordnet. Die Kurbelwelle 32 der Antriebseinheit 31 ragt in die Drehmomentwandlervorrichtung 10 des Kraftfahrzeuggetriebes 29. Die Drehmomentwandlervorrichtung 10 ist für den Antriebsstrang 11 des Kraftfahrzeugs 12 vorgesehen (Figur 2).

Die Drehmomentwandlervorrichtung 10 ist von einem Drehmomentwandler gebildet. Die Drehmomentwandlervorrichtung 10 umfasst ein Pumpenrad 34, ein Turbinenrad 35 und ein Leitrad 36, die für eine hydrodynamische Drehmomentübertragung vorgesehen sind. Das Pumpenrad 34 weist eine Mehrzahl von Schaufeln auf, die dazu vorgesehen sind, ein Betriebsmittel, wie insbesondere ein Öl, zu erfassen und zu beschleunigen. Das Pumpenrad 34 ist dazu vorgesehen, im Wesentlichen drehfest mit der Kurbelwelle 32 der Antriebseinheit 31 verbunden zu werden. Das Pumpenrad 34 ist dazu mit einem Wandlerdeckel 13 der Drehmomentwandlervorrichtung 10 verbunden. Der Wandlerdeckel 13 der Drehmomentwandlervorrichtung 10 ist wiederum über eine Flexplate 38 der Drehmomentwandlervorrichtung 10 mit der Kurbelwelle 32 der Antriebseinheit 31 verbunden. Für eine Übertragung des von der Antriebseinheit 31 bereitgestellten Drehmoments wandelt das Pumpenrad 34 eine von der Antriebseinheit 31 bereitgestellte mechanische Energie in Strömungsenergie um. Das Pumpenrad 34 bildet eine Primärseite der Drehmomentwandlervorrichtung 10 aus (Figur 2).

Das Turbinenrad 35 ist dazu vorgesehen, die von dem Pumpenrad 34 bereitgestellte Strömungsenergie aufzunehmen und als mechanische Energie bereitzustellen. Das Turbinenrad 35 ist dazu vorgesehen, mit einer nicht näher dargestellten Getriebeeingangswelle 37 der Drehmomentwandlervorrichtung 10 nachgeschalteten Automatikgetriebes 33 verbunden zu werden. Das Turbinenrad 35 bildet eine Sekundärseite der Drehmomentwandlervorrichtung 10 aus.

Die Drehmomentwandlervorrichtung 10 umfasst ferner einen Freilauf, der dazu vorgesehen ist, das Leitrad 36 gehäusefest abzustützen. Weist das Pumpenrad 34 eine höhere Drehzahl auf als das Leitrad 36, erzeugt das Pumpenrad 34 einen Betriebsmittelstrom, der an dem Turbinenrad 35 und an dem Leitrad 36 umgelenkt wird. Ein auf das Leitrad 36 dabei wirkendes Drehmoment ist in eine Sperrrichtung des Freilaufs gerichtet. Das Leitrad 36 ist dadurch gehäusefest angeordnet. Durch den zweifach abgelenkten Betriebsmittelstrom wirkt auf das Turbinenrad 35 ein Drehmoment, das größer sein kann als das von der Antriebseinheit 31 bereitgestellte Drehmoment. Weisen das Pumpenrad 34 und das Turbinenrad 35 eine gleiche oder ähnliche Drehzahl auf, wirkt die Drehmomentwandlervorrichtung 10 als hydrodynamische Kupplung. Das Leitrad 36 wird durch den Ölstrom mitgenommen. Ein auf das Leitrad 36 dabei wirkendes Drehmoment ist entlang einer Freilaufrichtung gerichtet. Das Leitrad 36 dreht mit.

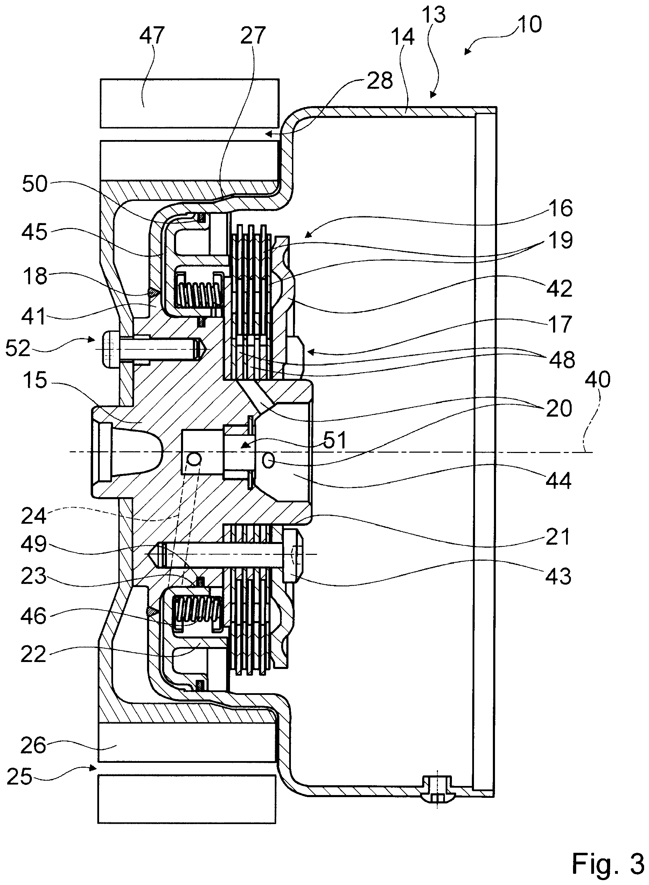

Des Weiteren weist die Drehmomentwandlervorrichtung 10 den Wandlerdeckel 13 auf. Der Wandlerdeckel 13 ist dazu vorgesehen, das Turbinenrad 35 und das Leitrad 36 zu übergreifen und eine Antriebsbewegung der Antriebseinheit 31 auf das Pumpenrad 34 zu übertragen. Der Wandlerdeckel 13 weist eine Deckelschale 14 und eine mit der Deckelschale 14 fest verbundene Nabe 15 auf. Die Nabe 15 ist auf einer Rotationsachse 40 des Wandlerdeckels 13 angeordnet. Die Deckelschale 14 ist im Wesentlichen schalenförmig ausgebildet. Mittels der Schalenform der Deckelschale 14 wird ein Übergreifen realisiert. Die Deckelschale 14 schließt an das Pumpenrad 34 der Drehmomentwandlervorrichtung 10 an. Die Deckelschale 14 schließt mit einer radial äußeren Kante an das Pumpenrad 34 der Drehmomentwandlervorrichtung 10 an. Die Deckelschale 14 ist nicht weiter sichtbar drehfest mit dem Pumpenrad 34 verbunden. Ferner ist die Deckelschale 14 einstückig mit der Nabe 15 ausgebildet. Die Nabe 15 ist über eine Schweißnaht 18 mit der Deckelschale 14 verbunden. Die Schweißnaht 18 ist von einer umlaufenden Schweißnaht 18 gebildet, welche mit einem definierten Abstand um die Rotationsachse 40 des Wandlerdeckels 13 umläuft. Die Deckelschale 14 ist über eine radial innenliegende Kante mit der Nabe 15 verbunden. Ferner weist die Nabe 15 auf ihrer Mantelfläche einen kreisringförmigen Fortsatz 41 auf, an welchen die Deckelschale 14 mittels der Schweißnaht 18 angeschweißt ist. Der Fortsatz 41 verläuft mit einem definierten Abstand in Umfangsrichtung um die Rotationsachse 40 (Figur 3).

Die Nabe 15 weist ferner eine gestufte Kontur auf. Eine Kontur der Nabe 15 bildet zumindest zwei Stufen 21, 23 aus. Die Außenkontur der Nabe 15 bildet zwei Stufen 21, 23 aus. Die Nabe 15 weist daher entlang der Rotationsachse 40 des Wandlerdeckels 13 unterschiedliche Radien auf, wobei die Stufen 21, 23 jeweils einen zumindest im Wesentlichen kontanten Radius aufweisen. Die Nabe 15 weist eine radial innere Stufe 21 auf. Ferner weist die Nabe 15 eine radial äußere Stufe 23 auf. Der kreisringförmige Fortsatz 41 der Nabe 15 ist auf einer Außenkontur der radial äußeren Stufe 23 angeordnet. Die radial innere Stufe 21 schließt auf einer dem Turbinenrad 35 zugewandten Seite an die radial äußere Stufe 23 an.

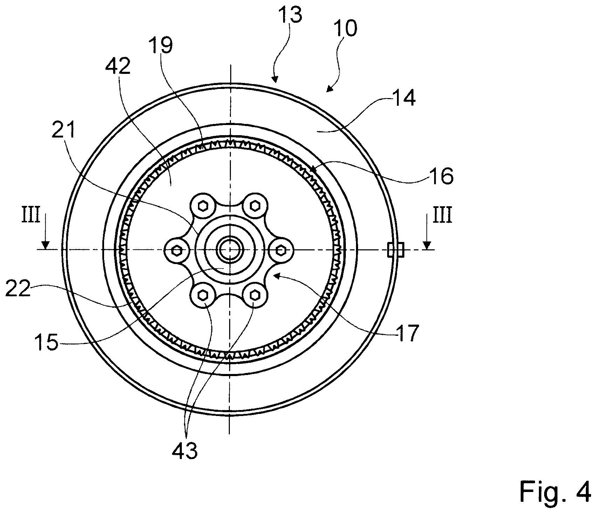

Ferner weist die Drehmomentwandlervorrichtung 10 eine Lamellenkupplung 16 auf. Die Lamellenkupplung 16 ist von einer Wandlerüberbrückungskupplung gebildet. Die Lamellenkupplung 16 ist dazu vorgesehen, das Pumpenrad 34 und das Turbinenrad 35 mechanisch miteinander zu verbinden. Die Lamellenkupplung 16 verbindet dazu den Wandlerdeckel 13 mechanisch mit dem Turbinenrad 35. Die Lamellenkupplung 16 umfasst einen inneren Lamellenzentrierkörper 17. Der innere Lamellenzentrierkörper 17 ist drehfest mit dem Wandlerdeckel 13 verbunden. Die Nabe 15 des Wandlerdeckels 13 bildet den inneren Lamellenzentrierkörper 17 der Lamellenkupplung 16 aus. Die Nabe 15 ist einstückig mit dem inneren Lamellenzentrierkörper 17 ausgebildet. Der innere Lamellenzentrierkörper 17 ist an der radial inneren Stufe 21 der Nabe 15 ausgebildet. Ferner weist die Lamellenkupplung 16 einen Außenlamellenträger 39 auf, welcher drehfest mit dem Turbinenrad 35 verbunden ist. Des Weiteren weist die Lamellenkupplung 16 mehrere Lamellen 19 auf. Die Lamellen 19 sind zwischen dem inneren Lamellenzentrierkörper 17 und dem Außenlamellenträger 39 angeordnet. Die Lamellen 19 umfassen dabei zumindest zwei Innenlamellen, welche drehfest an einem Innenlamellenträger angeordnet sind, und zumindest zwei Außenlamellen, welche drehfest an dem Außenlamellenträger 39 angeordnet sind. Die Lamellen 19 umfassen mehrere Innenlamellen, welche drehfest an dem Innenlamellenträger angeordnet sind, und mehrere Außenlamellen, welche drehfest an dem Außenlamellenträger 39 angeordnet sind. Die als Innenlamellen ausgebildeten Lamellen 19 der Lamellenkupplung 16 sind zusammen mit einem Gegenhalter 42 der Lamellenkupplung 16 mittels Schrauben 43 an die Nabe 15 des Wandlerdeckels 13 angeschraubt. Die als Innenlamellen ausgebildeten Lamellen 19 der Lamellenkupplung 16 sind auf der radial inneren Stufe 21 in axialer Richtung gegen eine Stirnseite der radial äußeren Stufe 23 verschraubt. Ferner sind zwischen den als Innenlamellen ausgebildeten Lamellen 19 Abstandshalter 48 angeordnet, welche die als Innenlamellen ausgebildeten Lamellen 19 beabstanden. Die Lamellenkupplung 16 weist viele Lamellen 19 auf, weshalb die Lamellen 19 mittels der Abstandshalter 48 beabstandet werden müssen. Die als Innenlamellen ausgebildeten Lamellen 19 sind zusammen mit den Abstandshaltern 48 fixiert. Die Abstandshalter 48 sind von Stegen gebildet. Der Gegenhalter 42 ist auf einer Seite der als Innenlamellen ausgebildeten Lamellen 19 angeordnet. Die Lamellen 19 der Lamellenkupplung 16 erstrecken sich ringförmig um die Nabe 15 des Wandlerdeckels 13. In einem unbetätigten Zustand der Lamellenkupplung 16 ist der Außenlamellenträger 39 relativ zu dem Innenlamellenträger drehbar. Ferner weist die Lamellenkupplung 16 einen Betätigungskolben 22 zu einer Betätigung der Lamellenkupplung 16 auf. Der Betätigungskolben 22 erstreckt sich ringförmig um die Nabe 15 des Wandlerdeckels 13. Der Betätigungskolben 22 ist in radialer Richtung gegenüber der Rotationsachse 40 des Wandlerdeckels 13 im Wesentlichen dicht zwischen der Nabe 15 und einer Innenseite der Deckelschale 14 angeordnet. Der Betätigungskolben 22 liegt in radialer Richtung an einer Innenseite einer Stufe 27 der Deckelschale 14 an. Der Betätigungskolben 22 ist an der radial äußeren Stufe 23 der Nabe 15 angeordnet. Die Nabe 15 bildete eine untere Kolbenlaufbahn des Betätigungskolbens 22. Ferner ist der Betätigungskolben 22 in axialer Richtung gegenüber der Rotationsachse 40 des Wandlerdeckels 13 zwischen dem Fortsatz 41 der Nabe 15 und den Lamellen 19 angeordnet. Der Betätigungskolben 22 ist in axialer Richtung gegenüber der Rotationsachse 40 des Wandlerdeckels 13 zwischen der Schweißnaht 18 und den Lamellen 19 angeordnet. Die Schweißnaht 18 ist in einem radialen Bereich von den Lamellen 19 der Lamellenkupplung 16 angeordnet. Die Schweißnaht 18 ist demnach aus der axialen Richtung betrachtet vollständig von den Lamellen 19 überdeckt. Der Gegenhalter 42 ist auf einer dem Betätigungskolben 22 abgewandten Seite der Lamellen 19 angeordnet. Bei einer Betätigung der Lamellenkupplung 16 wird der Betätigungskolben 22 in axialer Richtung gegen die Lamellen 19 gedrückt, sodass die Innenlamellen und die Außenlamellen der Lamellen 19 reibschlüssig verbunden werden. Der Gegenhalter 42 dient dabei dazu, eine der Kraft des Betätigungskolbens 22 entgegengerichtete Kraft aufzubringen, welche ein Wegdrücken und/oder ein Ausweichen der Lamellen 19 verhindern soll. Durch den Aufbau weist die Lamellenkupplung 16 einen vorteilhaft geringen Durchmesser auf (Figur 3, 4).

Des Weiteren weist die Nabe 15 zumindest einen Kühlölkanal 20 auf. Die Nabe 15 weist mehrere Kühlölkanäle 20 auf. Die Kühlölkanäle 20 sind dazu vorgesehen, Kühlöl für eine Kühlung der Lamellenkupplung 16 an der Lamellenkupplung 16 bereitzustellen. Die Kühlölkanäle 20 sind dazu vorgesehen, Kühlöl für eine Kühlung der Lamellen 19 der Lamellenkupplung 16 bereitzustellen. Die Kühlölkanäle 20 führen an die radial innere Stufe 21 der Nabe 15. Die Kühlölkanäle 20 erstrecken sich jeweils von einer inneren Aufnahme 44 der Nabe 15 durch die Nabe 15 an die radial innere Stufe 21. Die Kühlölkanäle 20 sind in Umfangsrichtung gleichmäßig verteilt. Die innere Aufnahme 44 der Nabe 15 ist von einer Achsaufnahme gebildet. Die innere Aufnahme 44 der Nabe 15 ist im Bereich der Rotationsachse 40 des Wandlerdeckels 13 angeordnet. Die innere Aufnahme 44 der Nabe 15 ist gegenüber der Rotationsachse 40 rotationssymmetrisch ausgebildet. Die innere Aufnahme 44 der Nabe 15 dient zu einer Aufnahme einer Antriebswelle. Die innere Aufnahme 44 der Nabe 15 dient zu einer Aufnahme der Getriebeeingangswelle 37. Die Nabe 15 weist im Bereich der Aufnahme 44 eine Lagerstelle 51 für die Getriebeeingangswelle 37 auf

Ferner weist die Nabe 15 zumindest einen Druckölkanal 24 für den Betätigungskolben 22 auf. Die Nabe 15 weist mehre Druckölkanäle 24 für den Betätigungskolben 22 auf. Die Druckölkanäle 24 sind dazu vorgesehen, Drucköl für eine Betätigung des Betätigungskolbens 22 bereitzustellen. Die Druckölkanäle 24 führen dazu in einen zumindest im Wesentlichen abgedichteten Raum 45, welcher auf einer den Lamellen 19 abgewandten Seite des Betätigungskolbens 22 angeordnet ist. Der Raum 45 wird durch den Betätigungskolben 22, die Nabe 15 und die Deckelschale 14 begrenzt. Durch eine Druckbeaufschlagung des Raums 45 mit Drucköl wird der Betätigungskolben 22 betätigt. Bei nachlassendem Druck wird der Betätigungskolben 22 mittels einer Rückstellfeder 46 rückgestellt. Die Druckölkanäle 24 führen an die radial äußere Stufe 23 der Nabe 15. Die Druckölkanäle 24 erstrecken sich jeweils von einer inneren Aufnahme 44 der Nabe 15 durch die Nabe 15 an die radial äußere Stufe 23 der Nabe 15. Die Druckölkanäle 24 sind in Umfangsrichtung gleichmäßig verteilt.

Ferner sind zwei Dichtungen 49, 50 zur Abdichtung des Raums 45 vorgesehen. Eine radial innere Dichtung 49 ist in einer umlaufenden Nut in der radial äußeren Stufe 23 der Nabe 15 angeordnet. Die radial innere Dichtung 49 ist zu einer Abdichtung eines Spalts zwischen der Nabe 15 und dem Betätigungskolben 22 vorgesehen. Eine radial äußere Dichtung 50 ist in einer umlaufenden Nut in dem Betätigungskolben 22 angeordnet. Die radial äußere Dichtung 50 ist zu einer Abdichtung eines Spalts zwischen dem Betätigungskolben 22 und der Deckelschale 14 vorgesehen.

Die E-Maschine 25 der Drehmomentwandlervorrichtung 10 ist teilweise radial außerhalb des Wandlerdeckels 13 angeordnet. Die E-Maschine 25 weist einen Rotor 26 auf. Ferner weist die E-Maschine 25 einen Stator 47 auf. Die Nabe 15 des Wandlerdeckels 13 ist zu einer Anbindung des Rotors 26 der zumindest einen E-Maschine 25 vorgesehen. Die Nabe 15 des Wandlerdeckels 13 ist zu einer Anbindung und Zentrierung des Rotors 26 der zumindest einen E-Maschine 25 vorgesehen. Der Rotor 26 ist mit der Nabe 15 verschraubt. Der Rotor 26 ist an einer Stirnseite der Nabe 15 angeschraubt. Ferner weist die Deckelschale 14 die in Umfangsrichtung verlaufende Stufe 27 auf. Die Stufe 27 erstreckt sich in axialer Richtung über den Betätigungskolben 22 und die Lamellenkupplung 16. Die Stufe 27 der Deckelschale 14 ist als Aufnahmebereich 28 für die E-Maschine 25 ausbildet. Die Stufe 27 der Deckelschale 14 ist zumindest als Aufnahmebereich 28 für den Rotor 26 der E-Maschine 25 ausbildet. Die Stufe 27 bildet einen ringförmigen Aufnahmebereich 28 aus, welcher von zwei Seiten durch die Deckelschale 14 begrenzt ist. Die E-Maschine 25 ragt teilweise in den Aufnahmebereich 28. Dadurch kann eine besonders kompakte Anordnung erreicht werden. Es kann insbesondere ein Durchmesser der Drehmomentwandlervorrichtung 10 gering gehalten werden. Insbesondere kann die Drehmomentwandlervorrichtung 10 dadurch vorteilhaft axial kompakt ausgeführt werden. Durch die kompakte Anordnung der Lamellenkupplung 16 kann die E-Maschine 25 radial um die Lamellenkupplung 16 angeordnet werden.

### Bezugszeichenliste

- 10: Drehmomentwandlervorrichtung
- 11: Antriebsstrang
- 12: Kraftfahrzeug
- 13: Wandlerdeckel
- 14: Deckelschale
- 15: Nabe
- 16: Lamellenkupplung
- 17: innerer Lamellenzentrierkörper
- 18: Schweißnaht
- 19: Lamelle
- 20: Kühlölkanal
- 21: Stufe
- 22: Betätigungskolben
- 23: Stufe
- 24: Druckölkanal
- 25: E-Maschine
- 26: Rotor
- 27: Stufe
- 28: Aufnahmebereich
- 29: Kraftfahrzeuggetriebe
- 30: Antriebsrad
- 31: Antriebseinheit
- 32: Kurbelwelle
- 33: Automatikgetriebe
- 34: Pumpenrad
- 35: Turbinenrad
- 36: Leitrad
- 37: Getriebeeingangswelle
- 38: Flexplate
- 39: Außenlamellenträger
- 40: Rotationsachse
- 41: Fortsatz
- 42: Gegenhalter
- 43: Schraube
- 44: Aufnahme
- 45: Raum
- 46: Rückstellfeder
- 47: Stator
- 48: Abstandshalter
- 49: Dichtung
- 50: Dichtung
- 51: Lagerstelle der Getriebeeingangswelle
- 52: Anbindungsbereich

## Patentansprüche

1. Drehmomentwandlervorrichtung, insbesondere für einen Antriebsstrang (11) eines Kraftfahrzeugs (12), mit einem Wandlerdeckel (13), der eine Deckelschale (14) und eine mit der Deckelschale (14) fest verbundene Nabe (15) aufweist, und mit zumindest einer Lamellenkupplung (16),
**dadurch gekennzeichnet, dass**
ein innerer Lamellenzentrierkörper (17) der Lamellenkupplung (16) einstückig durch die Nabe (15) ausgebildet ist.

2. Drehmomentwandlervorrichtung nach Anspruch 1,
**dadurch gekennzeichnet, dass**
die Nabe (15) über eine Schweißnaht (18) mit der Deckelschale (14) verbunden ist, wobei eine radiale Anordnung der Schweißnaht (18) in einem radialen Bereich von Lamellen (19) der Lamellenkupplung (16) liegt.

3. Drehmomentwandlervorrichtung nach Anspruch 1 oder 2,
**dadurch gekennzeichnet, dass**
die Nabe (15) zumindest einen Kühlölkanal (20) aufweist, welcher durch die Nabe einstückig ausgebildet ist und welcher dazu vorgesehen ist, Kühlöl für eine Kühlung der zumindest einen Lamellenkupplung (16) an der Lamellenkupplung (16) bereitzustellen.

4. Drehmomentwandlervorrichtung nach einem der vorhergehenden Ansprüche,
**dadurch gekennzeichnet, dass**
die Nabe (15) eine einstückig durch die Nabe ausgebildete gestufte Kontur aufweist, wobei der innere Lamellenzentrierkörper (17) an einer einstückig durch die Nabe ausgebildeten radial inneren Stufe (21) ausgebildet ist.

5. Drehmomentwandlervorrichtung nach Anspruch 4,
**dadurch gekennzeichnet, dass**
die Nabe (15) eine einstückig durch die Nabe ausgebildete radiale Lagerstelle (51) zur Lagerung einer Getriebeeingangswelle (37) aufweist.

6. Drehmomentwandlervorrichtung nach Anspruch 5,
**dadurch gekennzeichnet, dass**
der Kühlölkanal (20) von der radialen Lagerstelle (51) zu der radial inneren Stufe (21) der Nabe (15) führt.

7. Drehmomentwandlervorrichtung nach Anspruch 4,
**dadurch gekennzeichnet, dass**
die Lamellenkupplung (16) zumindest einen Betätigungskolben (22) zu einer Betätigung der Lamellenkupplung (16) aufweist, welcher an einer einstückig durch die Nabe ausgebildeten radial äußeren Stufe (23) der Nabe (15) angeordnet ist.

8. Drehmomentwandlervorrichtung nach Anspruch 7,
**dadurch gekennzeichnet, dass**
die Nabe (15) einen einstückig durch die Nabe ausgebildeten Druckölkanal (24) für den Betätigungskolben (22) aufweist, welcher an die radial äußere Stufe (23) der Nabe (15) führt.

9. Drehmomentwandlervorrichtung nach einem der vorhergehenden Ansprüche,
**dadurch gekennzeichnet, dass**
die zumindest eine Lamellenkupplung (16) als Wandlerüberbrückungskupplung ausgebildet ist.

10. Drehmomentwandlervorrichtung nach einem der vorhergehenden Ansprüche, **gekennzeichnet durch**
eine E-Maschine (25), welche zumindest teilweise radial außerhalb des Wandlerdeckels (13) angeordnet ist und zumindest einen Rotor (26) aufweist, wobei die Nabe (15) einen einstückig durch die Nabe ausgebildeten Anbindungsbereich (52) zu einer drehfesten Anbindung und radialen Zentrierung des Rotors (26) der E-Maschine (25) aufweist.

11. Drehmomentwandlervorrichtung nach Anspruch 10,
**dadurch gekennzeichnet, dass**
die Deckelschale (14) zumindest eine in Umfangsrichtung verlaufende Stufe (27) aufweist, welche einen radial abstützenden Aufnahmebereich (28) für den Rotor (26) der E-Maschine (25) ausbildet.

## Claims

1. Torque converter device, in particular for a drive train (11) of a motor vehicle (12), comprising a converter cover (13) having a cover shell (14) and a hub permanently joined to the cover shell (14), and comprising at least one multi-plate clutch (16),
**characterised in that**
an inner plate-centring body (17) of the multi-plate clutch (16) is formed in one piece by the hub (15).

2. Torque converter device according to claim 1,
**characterised in that**
the hub (15) is joined to the cover shell (14) by a weld seam (18), wherein a radial location of the weld seam (18) lies in a radial region of plates (19) of the multi-plate clutch (16).

3. Torque converter device according to claim 1 or 2,
**characterised in that**
the hub (15) has at least one cooling oil passage (20) formed in one piece by the hub and provided to supply cooling oil at the multi-plate clutch (16) for cooling the at least one multi-plate clutch (16).

4. Torque converter device according to any of the preceding claims,
**characterised in that**
the hub (15) has a stepped contour formed in one piece by the hub, wherein the plate-centring body (17) is formed at a radially inward step (21) formed in one piece by the hub.

5. Torque converter device according to claim 4,
**characterised in that**
the hub (15) has a radial bearing point (51) formed in one piece by the hub for mounting a gearbox input shaft (37).

6. Torque converter device according to claim 5,
**characterised in that**
the cooling oil passage (20) leads from the radial bearing point (51) to the radially inward step (21) of the hub (15).

7. Torque converter device according to claim 4,
**characterised in that**
the multi-plate clutch (16) has at least one actuating piston (22) located at a radially outward step (23) of the hub (15) formed in one piece by the hub for an actuation of the multi-plate clutch (16).

8. Torque converter device according to claim 7,
**characterised in that**
the hub (15) has a pressure oil passage (24) formed in one piece by the hub, which leads to the radially outward step (23) of the hub (15).

9. Torque converter device according to any of the preceding claims,
**characterised in that**
the at least one multi-plate clutch (16) is designed as a torque converter lockup clutch.

10. Torque converter device according to any of the preceding claims,
**characterised by**
an electric machine (25), which is at least partially located outside the converter cover (13) and has at least one rotor (26), wherein the hub (15) has a connecting region (52) formed in one piece by the hub for a non-rotatable connection and radial centring of the rotor (26) of the electric machine (25).

11. Torque converter device according to claim 10,
**characterised in that**
the cover shell (14) has at least one step (27), which extends in the circumferential direction and forms a radially supporting reception region (28) for the rotor (26) of the electric machine (25).

## Revendications

1. Dispositif convertisseur de couple, en particulier pour un groupe motopropulseur (11) d'un véhicule à moteur (12), comprenant un couvercle de convertisseur (13) qui présente une coque de couvercle (14) et un moyeu relié à demeure (15) à la coque de couvercle (14) et comprenant au moins un embrayage à disques multiples (16), **caractérisé en ce qu'**un corps de centrage de disques intérieur (17) de l'embrayage à disques multiples (16) est conçu d'un seul tenant avec le moyeu (15).

2. Dispositif convertisseur de couple selon la revendication 1, **caractérisé en ce que** le moyeu (15) est relié par un cordon de soudure (18) à la coque de couvercle (14), le cordon de soudure (18) étant situé radialement dans une zone radiale des disques (19) de l'embrayage à disques multiples (16).

3. Dispositif convertisseur de couple selon la revendication 1 ou la revendication 2, **caractérisé en ce que** le moyeu (15) présente au moins un canal d'huile de refroidissement (20) qui est conçu d'un seul tenant avec le moyeu et qui sert à fournir à l'embrayage à disques multiples (16) l'huile de refroidissement pour le refroidissement dudit embrayage à disques multiples (16).

4. Dispositif convertisseur de couple selon l'une quelconque des revendications précédentes, **caractérisé en ce que** le moyeu (15) présente un contour à plusieurs étages conçu d'un seul tenant avec le moyeu, le corps de centrage de disques intérieur (17) étant conçu sur un étage intérieur radial (21) d'un seul tenant avec le moyeu.

5. Dispositif convertisseur de couple selon la revendication 4, **caractérisé en ce que** le moyeu (15) présente un point de logement radial conçu d'un seul tenant avec le moyeu pour loger un arbre d'entrée de transmission (37).

6. Dispositif convertisseur de couple selon la revendication 5, **caractérisé en ce que** le canal d'huile de refroidissement (20) part du point de logement radial (51) à l'étage intérieur radial (21) du moyeu (15).

7. Dispositif convertisseur de couple selon la revendication 4, **caractérisé en ce que** l'embrayage à disques multiples (16) présente au moins un piston d'actionnement (22) pour actionner l'embrayage à disques multiples (16) qui est disposé sur un étage extérieur radial (23) du moyeu (15) conçu d'un seul tenant avec le moyeu.

8. Dispositif convertisseur de couple selon la revendication 7, **caractérisé en ce que** le moyeu (15) présente un canal d'huile sous pression (24) conçu d'un seul tenant avec le moyeu pour le piston d'actionnement (22) qui conduit à l'étage extérieur radial (23) du moyeu (15).

9. Dispositif convertisseur de couple selon l'une quelconque des revendications précédentes, **caractérisé en ce que** ledit embrayage à disques multiples (16) est conçu comme un embrayage de convertisseur de couple.

10. Dispositif convertisseur de couple selon l'une quelconque des revendications précédentes, **caractérisé en ce qu'**un moteur électrique (25) qui est disposé au moins à certains endroits radialement à l'extérieur du couvercle de convertisseur (13) et comprend au moins un rotor (26), le moyeu (15) présentant une zone de liaison (52) conçue d'un seul tenant avec le moyeu pour relier solidaire en rotation et pour centrer radialement le rotor (26) du moteur électrique (25).

11. Dispositif convertisseur de couple selon la revendication 10, **caractérisé en ce que** la coque de couvercle (14) présente au moins un étage (27) s'étendant dans la direction circonférentielle qui forme une zone de logement (28) servant d'appui radial au rotor (26) du moteur électrique (25).
